(19) Europäisches Patentamt / European Patent Office / Office européen des brevets

(11) **EP 2 865 862 B1**

(12) **EUROPEAN PATENT SPECIFICATION**

(45) Date of publication and mention
of the grant of the patent:
**14.06.2017 Bulletin 2017/24**

(51) Int Cl.:
*F01N 9/00* *(2006.01)*          *F01N 11/00* *(2006.01)*

(21) Application number: **14184015.7**

(22) Date of filing: **09.09.2014**

(54) **Operating system for catalyst of vehicle and method thereof**

Betriebssystem und Betriebsverfahren eines Katalysators für ein Fahrzeug

Système et méthode pour le contrôle d'un catalyseur d'un véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.10.2013 KR 20130127119**

(43) Date of publication of application:
**29.04.2015 Bulletin 2015/18**

(73) Proprietor: **Hyundai Motor Company
Seoul 137-938 (KR)**

(72) Inventor: **MOK, Jong Soo
Seongnam-si, Gyeonggi-do 463-935 (KR)**

(74) Representative: **Viering, Jentschura & Partner
mbB
Patent- und Rechtsanwälte
Am Brauhaus 8
01099 Dresden (DE)**

(56) References cited:
**WO-A1-2011/055176      DE-A1-102005 015 998
DE-A1-102007 044 863      US-A1- 2010 312 451**

## Description

## BACKGROUND OF THE INVENTION

### Field of the Invention

The present invention relates to a catalyst of a vehicle, and more particularly, to a system and a method for operating a catalyst of a vehicle that supports an improved prediction of exothermic energy of vehicle catalyst and a corresponding treatment.

### Description of Related Art

A vehicle is equipped with a catalytic converter for a treatment of exhaust gas of an engine. Typically, the vehicle controls an amount of fuel with a rich/lean state. The catalyst is capable of storing oxygen, and deoxidizes the exhaust gas to discharge water. The catalyst may be degraded by a variety of conditions. When the catalyst is degraded, an oxygen storage capacity (OSC) is reduced and a noise is generated. Furthermore, in severe cases, vehicle propulsion can be affected. In the meantime, the catalyst is influenced by a certain high-temperature environment. For example, when the catalyst is exposed to above an appropriate temperature, the durability of the catalyst may be deteriorated and, furthermore, may be damaged. To prevent this, in a related art, a variety of methods to detect a temperature of the catalyst have been proposed. For example, a conventional catalyst temperature measurement method is based on an air intake and an engine speed. However, according to such a method, the catalyst temperature is measured by an external factor regardless of the temperature measurement for a catalyst itself. Accordingly, the reliability of the detection results is low.

An exhaust catalyst temperature estimating apparatus and an exhaust catalyst temperature estimation method for an internal combustion engine is known from, e.g. WO 2011/055176 A1. The exhaust catalyst temperature estimating apparatus is provided for estimating an exhaust catalyst temperature of an exhaust catalyst in which a catalyst is loaded on a support and arranged in an exhaust system of an internal combustion engine. The known exhaust catalyst temperature estimating apparatus estimates the exhaust catalyst temperature using a first model formula to calculate a current exhaust catalyst temperature of the exhaust catalyst based on a parameter corresponding to a current exhaust gas status.

A method and an apparatus for modelling a temperature of a catalyst is known from, e.g. DE 10 2007 044 863 A1.

## BRIEF SUMMARY

The present invention provides a system for operating a catalyst of a vehicle according to claim 1 and a method for a system for operating a catalyst of a vehicle according to claim 5. Further embodiments are described in the dependent claims.

Various aspects of the present invention are directed to providing a system and a method for operating a catalyst of a vehicle that supports to measure an internal temperature of the catalyst more minutely and accurately.

In accordance with an aspect of the present invention, a system for operating a catalyst of a vehicle includes the catalyst configured to purify an exhaust gas of an engine, and a controller configured to perform a detection of internal temperature of the catalyst, wherein the controller detects the internal temperature of the catalyst by applying a change of precious metal loading of the catalyst to an internal temperature model of the catalyst.

The system further includes a loading sensor to detect the change of the precious metal loading of the catalyst.

The controller detects the internal temperature of the catalyst by applying a caloric value of the catalyst according to the change of the precious metal loading to a temperature modeling of the catalyst which is previously stored based on an air intake of the vehicle and a speed of the engine.

The controller detects the internal temperature of the catalyst from a temperature modeling data corresponding to the air intake, the speed of the engine, and the caloric value of the catalyst which is previously determined according to the change of the precious metal loading of the catalyst.

The controller adjusts an equivalence ratio when the internal temperature of the catalyst is a predefined certain temperature or more.

In another aspect of the present invention, a method for a system for operating a catalyst of a vehicle includes detecting an air intake of an engine of the vehicle, an engine speed, and a precious metal loading of the catalyst, and determining an internal temperature of the catalyst by applying a caloric value of catalyst according to a change of the precious metal loading to a catalyst heat data which is previously stored based on the air intake of the vehicle and the engine speed.

The method may further include adjusting an equivalence ratio when the internal temperature of the catalyst is a predefined certain temperature or more.

The system for operating the catalyst may include the catalyst configured to purify an exhaust gas of the engine, and a controller configured to perform detection of the internal temperature of the catalyst, wherein the controller detects the internal temperature of the catalyst by applying the change of the precious metal loading of the catalyst to an internal temperature model of the catalyst.

The system for operating the catalyst further includes a loading sensor to detect the change of the precious metal loading of the catalyst.

In further another aspect of the present invention, a method for operating a catalyst of a vehicle, may include storing a catalyst heat data corresponding to an internal temperature of the catalyst built based on an air intake of an engine of the vehicle, an engine speed, and a caloric value of the catalyst corresponding to a precious metal loading of the catalyst, and determining an internal temperature of the catalyst in response to the detected value based on the catalyst heat data.

The method may further include adjusting an equivalence ratio when the internal temperature of the catalyst is a predefined certain temperature or more.

The system for operating the catalyst may include the catalyst configured to purify an exhaust gas of the engine, and a controller configured to perform detection of the internal temperature of the catalyst, wherein the controller detects the internal temperature of the catalyst by applying a change of the precious metal loading of the catalyst to an internal temperature model of the catalyst

The system for operating the catalyst may further include a loading sensor to detect the change of the precious metal loading of the catalyst.

The methods and apparatuses of the present invention have other features and advantages which will be apparent from or are set forth in more detail in the accompanying drawings, which are incorporated herein, and the following Detailed Description, which together serve to explain certain principles of the present invention.

## BRIEF DESCRIPTION OF THE DRAWINGS

FIG. 1 is a block diagram illustrating a schematic configuration of a vehicle catalyst operating system 100 according to an exemplary embodiment of the present invention.

FIG. 2 is a flowchart illustrating a vehicle catalyst operating method according to an exemplary embodiment of the present invention.

FIG. 3 is a diagram illustrating a heat emission quantity according to an internal oxidation reaction of a catalyst according to an exemplary embodiment of the present invention.

FIG. 4 is a diagram illustrating a structure of an internal CO oxidation reaction of three-way catalytic.

FIG. 5 is a diagram illustrating an actual measurement temperature difference of catalyst according to a change of loading of precious metal catalyst.

FIG. 6 is a diagram illustrating a suitability of predicted temperature due to a change of heat generation data according to loading of precious metal catalyst.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

## DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that the present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

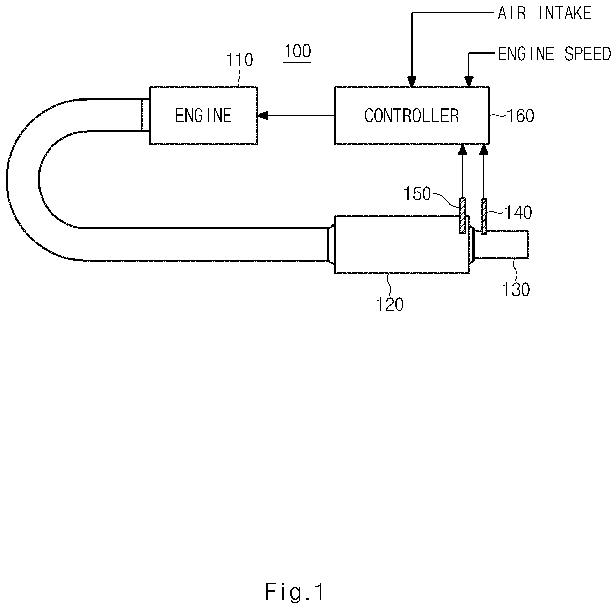

FIG. 1 is a block diagram illustrating a schematic configuration of a vehicle catalyst operating system 100 according to an exemplary embodiment of the present invention.

Referring to FIG. 1, the vehicle catalyst operating system 100 of the present invention includes an engine 110, a catalyst 120, an exhaust port 130, a loading sensor 150, and a controller 160. Additionally, the vehicle catalyst operating system 100 may further include a rear oxygen sensor 140.

Such a configuration of the vehicle catalyst operating system 100 may calculate an internal temperature of catalyst 120 by using an exhaust gas flow rate, an exhaust gas temperature, an exhaust gas component, and the loading amount of precious metal catalyst obtained through the loading sensor 150. The vehicle catalyst operating system 100 may operate protection logic to protect the catalyst based on the obtained internal temperature of the catalyst.

When the protection logic is operated, the vehicle catalyst operating system 100 may adjust a concentration of equivalence ratio to reduce the catalyst temperature. This enables the vehicle catalyst operating system 100 of the present invention to reduce the catalyst temperature by suppressing the oxidation generated in the inside of the catalyst. The above-described vehicle catalyst operating system 100 reflects the change of internal oxidation reaction to a control model according to an amount of the precious metal catalyst deposited in the inside of the catalyst 120 to determine the internal catalyst temperature. Based on this model, the vehicle catalyst operating system 100 of the present invention may accurately predict the internal temperature of the catalyst 120 having different characteristics for each regulation in the same engine. In addition, the vehicle catalyst operating system 100 of the present invention may prevent the adjustment of unnecessary rich condition in a high speed region.

The engine 110 is a configuration to burn the injected fuel to generate a power. The engine 110 may be operated in a constant speed according to a control of a motor controller, e.g., the controller 160. The engine speed may be feedback again to the controller 160. The engine 110 may discharge an exhaust gas due to the fuel combustion to the exhaust port 130 through the catalyst 120.

The catalyst 120 is disposed between the engine 110 and the exhaust port 130 to perform a purification of exhaust gas discharged from the engine 110. This catalyst 120 may be configured with various types to purify exhaust gas. In particular, the catalysts of the present invention 120 may include precious metals such as palladium, rhodium, platinum, cerium, and the like for a three-way catalytic oxidation reaction. The loading of the precious metal included in the catalyst 120 may be changed. The change of the loading of the precious metal in the catalyst 120 may be sensed by the loading sensor 150.

The exhaust port 130 is disposed at the rear end of the catalyst 120 to discharge a material discharged from the catalyst 120. Such an exhaust port 130 guides the exhaust gas output from the catalyst 120. The rear oxygen sensor 140 may be disposed at one side of the exhaust port 130.

The loading sensor 150 is a sensor that detects the change of the precious metal loading in the catalyst 120.

The rear oxygen sensor 140 is disposed at the outlet side of the catalyst 120, and detects the oxygen concentration which is switched according to rich/lean of a mixing ratio to the controller 160. The rear oxygen sensor 140 adds up the exhaust gas discharged through the exhaust port 130 to detect the deterioration of the catalyst.

Since a heat loss is slightly generated when the exhaust gas burnt in the engine 110 is supplied to the catalyst 120 through an exhaust pipe, it may be determined that the inlet temperature of the catalyst 120 is identical with the discharge temperature of the engine 110. Consequently, the controller 160 may determine the exhaust gas modeling temperature of the catalyst 120 according to an engine speed and an air intake.

In particular, the controller 160 additionally performs a modeling of an internal temperature change of catalyst according to a catalyst loading with respect to a basic logic that performs a modeling of temperature of each part from the exhaust port of the engine 110 to the rear end of the catalyst 120 by modeling a thermodynamics of an exhaust system, such that the internal temperature change of catalyst according to a change of catalyst loading can be predicted accurately. The temperature due to the heat generated in the catalyst may be determined by the exhaust gas flow rate, the exhaust gas temperature, the exhaust gas component, and the oxidation reaction generated in the precious metal in the inside of the catalyst. The quantity of heat of exhaust gas which is latent in the exhaust gas may be determined by an exhaust flow rate and a heat capacity of the exhaust gas.

That is, the internal temperature of catalyst may be determined according to the quantity of heat of exhaust gas and the oxidation reaction of precious metal loading deposited in the catalyst. Meanwhile, the controller 160 may perform a modeling of temperature generated in the inside of the catalyst based on a convective heat transfer. That is, the controller 160 may calculate the internal temperature of catalyst as described in a following Equation 1 by using the quantity of heat of exhaust gas and the oxidation reaction energy generated in the precious metal in the inside of the catalyst.

[Equation 1]

$$Tcat = Q/m^\wedge * Cp$$

Here, Tcat is an internal temperature of a catalyst, Q is an internal oxidation reaction energy of a catalytic, m^ is an exhaust gas flow rate, Cp is a heat capacity of an exhaust gas. The internal oxidation reaction energy Q of a catalyst is changed depending on the precious metal loading deposited in the catalyst 120. Thus, the controller 160 configures a dependent variable data of precious metal loading of the catalyst 120 with the internal oxidation reaction energy Q of a catalyst to reflect the change of internal temperature of catalyst due to loading of the precious metal.

As described above, the vehicle catalyst operating system 100 of the present invention may apply the change of precious metal loading of catalyst 120 to calculate the quantity of heat according to the internal oxidation reaction of the catalyst 120 such that the catalyst temperature can be measured more accurately.

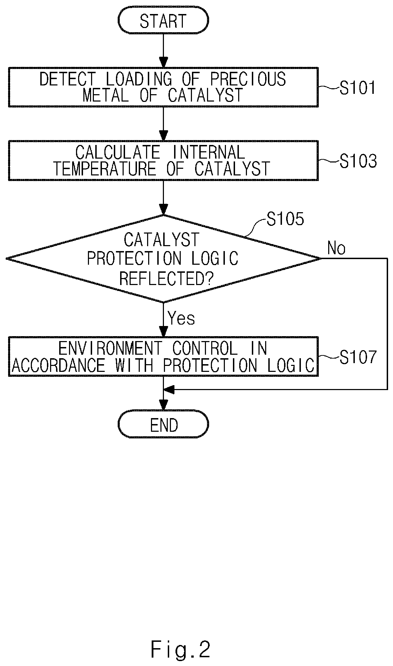

FIG. 2 is a flowchart illustrating a vehicle catalyst operating method according to an exemplary embodiment of the present invention.

Referring to FIG. 2, in the vehicle catalyst operating method of the present invention, the controller 160 detects the loading of precious metal of catalyst 120 in step S101. To this end, the controller 160 may activate the loading sensor 150, and detect the loading of the precious metal of the catalyst 120 at the present point by using the loading sensor 150.

Next, the controller 160 may calculate the internal temperature of the catalyst in step S103. In this process, the controller 160 may apply the change value of the loading of precious metal to the temperature modeling provided by using the air intake and the engine speed. The controller 160 may previously store a data of temperature modeling corresponding to a heat generation data of the catalyst calculated in response to the change of the air intake and the engine speed. The temperature modeling corresponding to the heat generation data of the catalyst in response to the change of the air intake and the engine speed may be provided based on a variety of experiments.

Next, the controller 160 may determine whether catalyst protection logic is reflected in step S105. That is, the controller 160 may determine whether the current internal temperature of the catalyst is a predefined certain temperature or more. When the internal temperature of the catalyst is a predefined certain temperature or more in step S105, the controller 160 may perform an environment control in accordance with protection logic in step S107. For example, the controller 160 may perform the adjustment of equivalence ratio to reduce the temperature of the catalyst 120. In the meantime, when the internal temperature of the catalytic is below a predefined certain temperature in step S105, the controller 160 may control to skip the step S107.

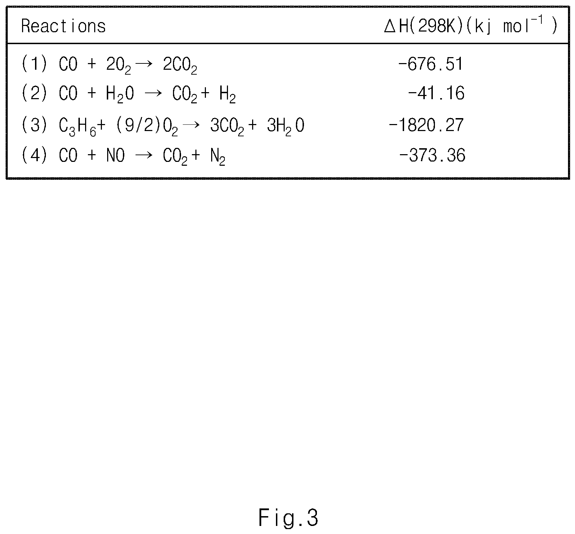

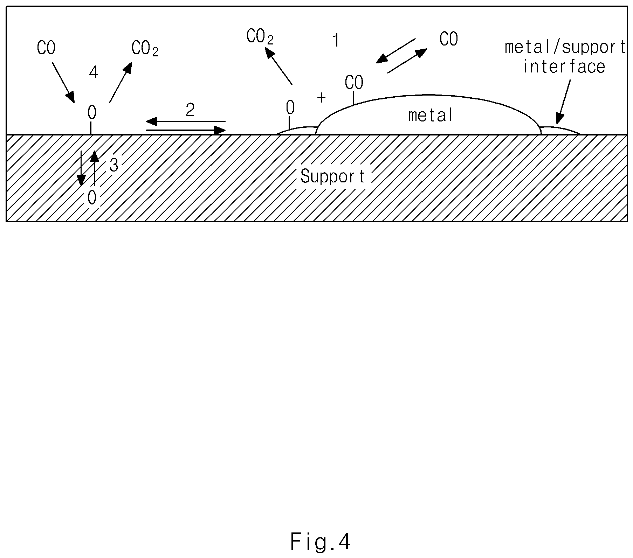

FIG. 3 is a diagram illustrating a heat emission quantity according to an internal oxidation reaction of a catalyst according to an exemplary embodiment of the present invention, and FIG. 4 is a diagram illustrating a structure of an internal CO oxidation reaction of three-way catalytic.

Referring to FIG. 3 and FIG. 4, in the heat emission quantity according to an internal chemical oxidation reaction in the inside of the catalyst 120, the total energy amount is increased or decreased according to increase or decrease of the loading (Metal Site) of precious metal of the catalyst 120.

This is reflected to the internal temperature modeling with a dependent function of precious metal content such that the accuracy of prediction of internal temperature of the catalyst may be increased by using the difference of the emission quantity of heat energy according to the change of precious metal loading of catalyst.

The controller 160 of the vehicle catalyst operating system 100 may apply the measured loading of the precious metal to the energy calculation method of oxidation reaction as shown in FIG. 3 such that the internal temperature of the catalyst can be calculated through a real-time calculation. That is, the controller 160 may calculate a calorific value of catalyst according to a detected loading of precious metal. In addition, the controller 160 may calculate the internal temperature of catalyst by applying the calculated calorific value of catalyst to the temperature modeling corresponding to the heat data of catalyst previously defined according to the air intake and the engine speed.

The vehicle catalyst operating system 100 of the present invention configures the heat energy data of catalyst by reflecting a reference catalyst, a reference engine speed, a dependent variable data of intake flow rate, and a variable data of heat change due to the loading of precious metal catalyst. Here, vehicle catalyst operating system 100 may digitize the calorific value of catalyst according to the change of loading of precious metal as an experimental data with respect to various reference catalysts to store in advance.

That is, the vehicle catalyst operating system 100 may previously store the temperature modeling corresponding to the heat data of catalyst based on the data for the air intake, the engine speed, and the calorific value of catalyst according to the change of loading of precious metal. In addition, the vehicle catalyst operating system 100 may detect a corresponding value of internal temperature of catalyst with reference to a corresponding reference data based on the air intake at the time of detection, the engine speed, and the element of loading of precious metal.

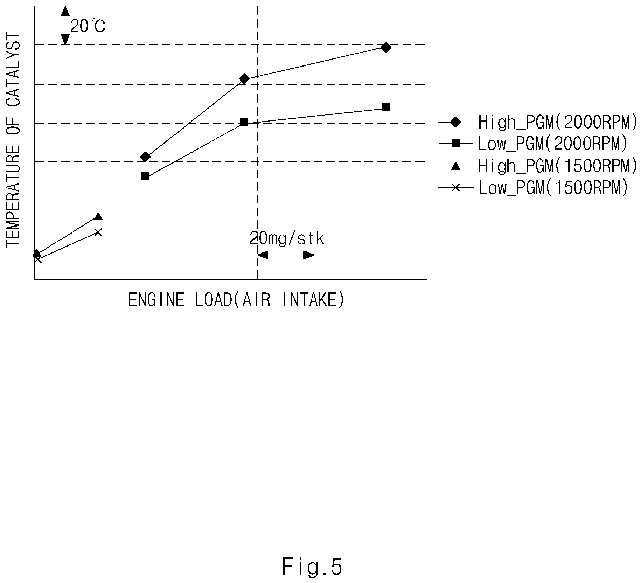

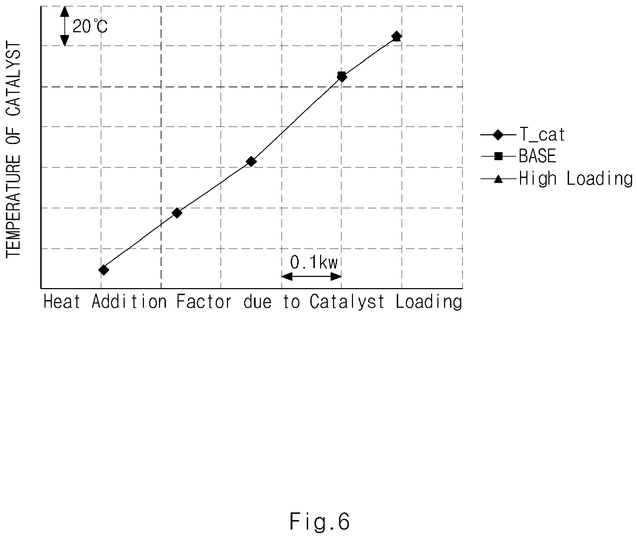

FIG. 5 is a diagram illustrating an actual measurement temperature difference of catalyst according to a change of loading of precious metal catalyst, and FIG. 6 is a diagram illustrating a suitability of predicted temperature due to a change of heat generation data according to loading of precious metal catalyst.

Referring to FIG. 5 and FIG. 6, the measured temperature of the catalyst 120 may be changed in response to the engine speed according to the change of the loading of the precious metal. Consequently, if the element for the change of loading of precious metal is applied to the temperature change of catalyst 120, temperature can be detected more precisely.

Thus, the present invention dependently reflects a heat generation due to an oxidation reaction occurred in the inside of the catalyst to the loading of the catalyst such that the inner temperature of the catalyst can be predicted more precisely.

In addition, the present invention applies the variation of the inner temperature of the catalyst according to a change of catalyst which is not applied in the previous detection of temperature of the catalyst, such that the inner temperature of the catalyst differentiated in a plurality of vehicles having the same engine can be predicted precisely.

In addition, according to an exemplary embodiment of the present invention, a development period of engine and vehicle can be shortened, and a quality problem due to a catalyst temperature prediction error can be prevented in advance.

In addition, the present invention precisely predicts the catalyst temperature such that a deterioration of fuel efficiency due to a reflection of unnecessary catalyst protection logic can be prevented.

The foregoing descriptions of specific exemplary embodiments of the present invention have been presented for purposes of illustration and description. They are not intended to be exhaustive or to limit the invention to the precise forms disclosed, and obviously many modifications and variations are possible within the frame defined by the claims. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto.

**SYMBOL OF EACH OF THE ELEMENTS IN THE FIGURES**

| | |
|---|---|
| 100: | THE VEHICLE CATALYST OPERATING SYSTEM |
| 110: | ENGINE |
| 120: | CATALYST |
| 130: | EXHAUST PORT |
| 140: | OXYGEN SENSOR |
| 150: | LOADING SENSOR |
| 160: | CONTROLLER |

**Claims**

1. A system for operating a catalyst of a vehicle, the system (100) comprising:

   the catalyst (120) configured to purify an exhaust gas of an engine (110);
   a loading sensor (150) configured to detect a change of a precious metal loading of the catalyst; and
   a controller (160) configured to perform a detection of internal temperature of the catalyst (120), wherein the controller (160) detects the internal temperature of the catalyst (120) by applying the change of the precious metal loading of the catalyst (120) to an internal temperature model of the catalyst.

2. The system (100) of claim 1, wherein the controller (160) detects the internal temperature of the catalyst (120) by applying a caloric value of the catalyst according to the change of the precious metal loading to a temperature modeling of the catalyst (120) which is previously stored based on an air intake of the vehicle and a speed of the engine (110).

3. The system (100) of claim 1, wherein the controller (160) detects the internal temperature of the catalyst (120) from a temperature modeling data corresponding to the air intake, the speed of the engine (110), and the caloric value of the catalyst (120) which is previously determined according to the change of the precious metal loading of the catalyst.

4. The system (100) of claim 1, wherein the controller (160) adjusts an equivalence ratio when the internal temperature of the catalyst (120) is a predefined certain temperature or more.

5. A method for a system (100) for operating a catalyst of a vehicle, the method comprising:

   detecting (S101) an air intake of an engine (110) of the vehicle, an engine speed, and a precious metal loading of the catalyst (120); and
   determining (S103) an internal temperature of the catalyst (120) by applying a caloric value of catalyst according to a change of the precious metal loading to a catalyst heat data which is previously stored based on the air intake of the vehicle and the engine speed,
   wherein the system (100) for operating the catalyst further includes a loading sensor (150) to detect the change of the precious metal loading of the catalyst (120).

6. The method of claim 5, further comprising adjusting an equivalence ratio when the internal temperature of the catalyst (120) is a predefined certain temperature or more.

7. The method of claim 5, wherein the system for operating the catalyst includes:

   the catalyst (120) configured to purify an exhaust gas of the engine (110); and
   a controller (160) configured to perform detection of the internal temperature of the catalyst, wherein the controller (160) detects the internal temperature of the catalyst (120) by applying the change of the precious metal loading of the catalyst to an internal temperature model of the catalyst.

**Patentansprüche**

1. Ein System zum Betreiben eines Katalysators eines Fahrzeugs, das System (100) aufweisend:

   den Katalysator (120), der konfiguriert ist, um ein Abgas eines Verbrennungsmotors (110) zu reinigen,
   einen Beladungssensor (150), der konfiguriert ist, um eine Änderung einer Edelmetallbeladung des Katalysators zu ermitteln, und
eine Steuereinheit (160), die konfiguriert ist, um eine Ermittlung einer Innentemperatur des Katalysators (120) auszuführen,
wobei die Steuereinheit (160) die Innentemperatur des Katalysators (120) durch Anwenden der Änderung der Edelmetallbeladung des Katalysators (120) auf ein Innentemperaturmodell des Katalysators ermittelt.

2. Das System (100) nach Anspruch 1, wobei die Steuereinheit (160) die Innentemperatur des Katalysators (120) durch Anwenden eines kalorischen Werts des Katalysators gemäß der Änderung der Edelmetallbeladung auf eine Temperaturmodellierung des Katalysators (120), die zuvor gespeichert wird, basierend auf einer Luftansaugung des Fahrzeugs und einer Drehzahl des Verbrennungsmotors (110) ermittelt.

3. Das System (100) nach Anspruch 1, wobei die Steuereinheit (160) die Innentemperatur des Katalysators (120) aus Temperaturmodellierungsdaten ermittelt, die der Luftansaugung, der Drehzahl des Verbrennungsmotors (110) und dem kalorischen Wert der Katalysators (120) entsprechen, der zuvor gemäß der Änderung der Edelmetallbeladung des Katalysators ermittelt wird.

4. Das System (100) nach Anspruch 1, wobei die Steuereinheit (160) ein Äquivalentverhältnis einstellt, wenn die Innentemperatur des Katalysators (120) eine vorgegebene bestimmte Temperatur oder mehr ist.

5. Ein Verfahren für ein System (100) zum Betreiben eines Katalysators eines Fahrzeugs, das Verfahren aufweisend:

Ermitteln (S101) einer Luftansaugung eines Verbrennungsmotors (110) des Fahrzeugs, einer Verbrennungsmotordrehzahl und einer Edelmetallbeladung des Katalysators (120), und
Ermitteln (S103) einer Innentemperatur des Katalysators (120) durch Anwenden eines kalorischen Werts des Katalysators gemäß einer Änderung der Edelmetallbeladung auf Katalysatorwärmedaten, die vorher gespeichert werden, basierend auf der Luftansaugung des Fahrzeugs und der Verbrennungsmotordrehzahl, wobei das System (100) zum Betreiben des Katalysators ferner aufweist einen Beladungssensor (150) zum Ermitteln der Änderung der Edelmetallbeladung des Katalysators (120).

6. Das Verfahren nach Anspruch 5, ferner aufweisend Einstellen eines Äquivalentverhältnisses, wenn die Innentemperatur des Katalysators (120) eine vorgegebene bestimmte Temperatur oder mehr ist.

7. Das Verfahren nach Anspruch 5, wobei das System zum Betreiben des Katalysators aufweist:

den Katalysator (120), der konfiguriert ist, um ein Abgas des Verbrennungsmotors (110) zu reinigen, und
eine Steuereinheit (160), die konfiguriert ist, um eine Ermittlung der Innentemperatur des Katalysators auszuführen,
wobei die Steuereinheit (160) die Innentemperatur des Katalysators (120) durch Anwenden der Änderung der Edelmetallbeladung des Katalysators auf ein Innentemperaturmodell des Katalysators ermittelt.

**Revendications**

1. Système destiné à actionner un catalyseur d'un véhicule, le système (100) comprenant :

le catalyseur (120) configuré de façon à épurer les gaz d'échappement d'un moteur (110) ;
un détecteur de charge (150) configuré de façon à détecter une modification de la charge en métal précieux du catalyseur ; et
un contrôleur (160) configuré de façon à exécuter une détection de la température interne du catalyseur (120) ;
dans lequel le contrôleur (160) détecte la température interne du catalyseur (120) en appliquant la modification de la charge en métal précieux du catalyseur (120) à un modèle de température interne du catalyseur.

2. Système (100) selon la revendication 1, dans lequel le contrôleur (160) détecte la température interne du catalyseur (120) en appliquant une valeur calorique du catalyseur selon la modification de la charge en métal précieux, à une modélisation de la température du catalyseur (120) qui a été stockée au préalable sur la base d'une admission d'air du véhicule et d'une vitesse du moteur (110).

3. Système (100) selon la revendication 1, dans lequel le contrôleur (160) détecte la température interne du catalyseur (120) à partir des données de modélisation de la température qui correspondent à l'admission d'air, à la vitesse du moteur (110), et à la valeur calorique du catalyseur (120) qui a été déterminée au préalable selon la modification de la charge en métal précieux du catalyseur.

4. Système (100) selon la revendication 1, dans lequel le contrôleur (160) règle un rapport d'équivalence lorsque la température interne du catalyseur (120) est égale ou supérieure à une certaine température prédéfinie.

5. Procédé d'un système (100) destiné à actionner un catalyseur d'un véhicule, le procédé comprenant les étapes consistant à :

détecter (S101) une admission d'air d'un moteur (110) du véhicule, une vitesse de moteur, et une charge en métal précieux du catalyseur (120) ; et

à déterminer (S103) la température interne du catalyseur (120) en appliquant une valeur calorique de catalyseur selon une modification de la charge en métal précieux à des données de chaleur de catalyseur qui ont été stockées au préalable sur la base de l'admission d'air du véhicule et de la vitesse du moteur ;

dans lequel le système (100) destiné à actionner le catalyseur comprend en outre un détecteur de charge (150) destiné à détecter la modification de la charge en métal précieux du catalyseur (120).

6. Procédé selon la revendication 5, comprenant en outre une étape consistant à régler un rapport d'équivalence lorsque la température interne du catalyseur (120) est égale ou supérieure à une certaine température prédéfinie.

7. Procédé selon la revendication 5, dans lequel le système destiné à actionner le catalyseur comprend :

le catalyseur (120) configuré de façon à épurer les gaz d'échappement du moteur (110) ; et

un contrôleur (160) configuré de façon à exécuter une détection de la température interne du catalyseur ;

dans lequel le contrôleur (160) détecte la température interne du catalyseur (120) en appliquant la modification de la charge en métal précieux du catalyseur à un modèle de la température interne du catalyseur.

Fig.1

START

DETECT LOADING OF PRECIOUS
METAL OF CATALYST — S101

CALCULATE INTERNAL
TEMPERATURE OF CATALYST — S103

S105

CATALYST
PROTECTION LOGIC
REFLECTED?

No

Yes

ENVIRONMENT CONTROL IN
ACCORDANCE WITH PROTECTION LOGIC — S107

END

Fig.2

| Reactions | $\Delta H(298K)(kj\ mol^{-1})$ |
|---|---|
| (1) $CO + 2O_2 \rightarrow 2CO_2$ | -676.51 |
| (2) $CO + H_2O \rightarrow CO_2 + H_2$ | -41.16 |
| (3) $C_3H_6 + (9/2)O_2 \rightarrow 3CO_2 + 3H_2O$ | -1820.27 |
| (4) $CO + NO \rightarrow CO_2 + N_2$ | -373.36 |

Fig.3

Fig.4

Fig.5

Fig.6

**EP 2 865 862 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011055176 A1
- DE 102007044863 A1